# EUROPÄISCHE PATENTANMELDUNG

(11) **EP 4 559 602 A2**
(43) Veröffentlichungstag der Anmeldung: **28.05.2025**
(21) Anmeldenummer: 24206341.0
(22) Anmeldetag: 14.10.2024
(51) Int. Cl.: B23B 31/117

(54) **WERKZEUGSPANNFUTTER**

(30) Priorität: 02.11.2023 DE 102023130360
(71) Anmelder: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(57) **Zusammenfassung**

Die Erfindung betrifft ein **Werkzeugspannfutter,** deren besondere **Verwendung** und ein damit gebildetes **Spannfuttersystem.**

Das **Werkzeugspannfutter** - zum Spannen von einen Werkzeugschaft aufweisenden Werkzeugen - weist eine an ihrem freien Ende offene und sich an einem Werkzeugspannfuttergrundkörper zum freien Ende hin anschließende Hülsenpartie auf. Die Hülsenpartie bildet eine Werkzeugaufnahme zum reibschlüssigen Festsetzen des Werkzeugschafts im Presssitz aus. Die Hülsenpartie besteht aus einer Innenhülse und einer Außenhülse. Die Außenhülse nimmt dabei die Innenhülse im betriebsbereiten Zustand auf und ist mit ihr spielfrei gefügt.

Das **Werkzeugspannfutter** ist gekennzeichnet, durch einen Dehnungsspalt zwischen dem Werkzeugspannfuttergrundkörper, der Innenhülse und der Außenhülse, durch mindestens eine erste Zwischenhülse zwischen der Innen- und der Außenhülse oder dadurch, dass eine Funktionsfläche zumindest eines der bei der Hülsenpartie miteinander gefügten Bauteile thermochemisch wärmebehandelt und/oder beschichtet ist.

## Beschreibung

Die Erfindung betrifft ein **Werkzeugspannfutter** nach dem Oberbegriff der unabhängigen Ansprüche, deren besondere **Verwendung** und ein damit gebildetes **Spannfuttersystem,** jeweils nach dem Oberbegriff der entsprechenden unabhängigen Ansprüche.

### TECHNISCHER HINTERGRUND

Spannfutter in Gestalt von Schrumpffuttern sind in der Praxis sehr bewährt, weil sie mit geringem Aufwand sehr hohe Haltekräfte aufbringen können. Außerdem bieten sie die Möglichkeit, das eingespannte Werkzeug mit einer hohen Biegesteifigkeit zu halten, so dass es exakt geführt wird und beim Zerspanvorgang eine hochgenaue Geometrie am Werkstück erzeugt. Gleichzeitig spannen sie aber den Werkzeugschaft oft sehr starr bzw. hart ein, wodurch die Schwingungsproblematik an Bedeutung gewinnt.

Die Qualität der Einspannung eines Schaftwerkzeugs ist von großer Bedeutung für die mit dem Werkzeug zu erreichende Bearbeitungsqualität und nicht selten auch für die Werkzeugstandzeit.

Dies gilt umso mehr für die Hochgeschwindigkeitszerspanung von Metallen, insbesondere mit einer Schnittgeschwindigkeit von mehr als 800 m/min oder gar mehr als 1.100 m/min.

Die Qualität der Einspannung hängt unter anderem auch davon ab, wie gut eventuell auftretende Schwingungen gedämpft werden können. Eine wesentliche Quelle solcher Schwingungen kann zum Beispiel der schnelle Wechsel der Anzahl der aktuell spanabnehmend mit dem Werkstück im Eingriff befindlichen Fräserschneiden sein. Hieraus können zum Beispiel erheblich beeinträchtigende Biegeschwingungen resultieren.

Andersartige, aber ebenfalls schädliche Schwingungen können aus der Tendenz eines Schaftwerkzeugs und insbesondere eines Schaftfräsers resultieren, im Betrieb zu walken. Unter Walken versteht man die mit jeder Umdrehung wiederkehrende und sich im Laufe der Umdrehung örtlich ändernde geringe elastische Verformung des Schafts durch den Kontakt mit dem Werkstück unter der Last des Vorschubs.

Die aus dem Stand der Technik bekannte DE 10 2021 119 935 A1 trägt diesen Anforderungen Rechnung, indem sie ein Werkzeugspannfutter zum Spannen von einen Werkzeugschaft aufweisenden Werkzeugen zur Verfügung stellt - mit einer an ihrem freien Ende offenen Hülsenpartie aus bevorzugt elektrisch leitendem Werkstoff, die eine Werkzeugaufnahme zum reibschlüssigen Festsetzen des Werkzeugschafts im Presssitz durch Einschrumpfen ausbildet, wobei die Hülsenpartie - vorzugsweise jedenfalls über die gesamte axiale Länge der Werkzeugaufnahme hinweg - aus einer Innenhülse und einer diese im betriebsbereiten Zustand aufnehmenden, spielfrei mit ihr gefügten Außenhülse - vorzugweise ebenfalls aus einem elektrisch leitenden Werkstoff - besteht.

### AUFGABE

Es ist die Aufgabe der Erfindung, ein Werkzeugspannfutter anzugeben, welches bekannte Spannfutter weiter verbessert, insbesondere welches große Spannkräfte aufbringen kann und gleichzeitig besser mit auftretenden Schwingungen umgehen kann.

### LÖSUNG

Diese Aufgabe wird gelöst durch **Werkzeugspannfutter,** einer **Verwendung** eines Werkzeugspannfutters sowie ein **Werkzeugspannsystem** mit den Merkmalen des jeweiligen unabhängigen Anspruchs.

Vorteilhafte Weiterbildungen der Erfindung sind Gegenstand abhängiger Ansprüche sowie der nachfolgenden Beschreibung - und beziehen sich sowohl auf die **Werkzeugspannfutter,** die **Verwendung** sowie auch auf das **Werkzeugspannsystem.**

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Das **Werkzeugspannfutter** - zum Spannen von einen Werkzeugschaft aufweisenden Werkzeugen, wie Beispielsweise Fräswerk- oder Bohrwerkzeuge - weist eine an ihrem freien Ende offene und sich an einem Werkzeugspannfuttergrundkörper zum freien Ende hin anschließende Hülsenpartie auf.

Die Hülsenpartie bildet eine Werkzeugaufnahme zum reibschlüssigen Festsetzen des Werkzeugschafts im Presssitz, insbesondere durch Einschrumpfen, aus. Die Hülsenpartie kann dabei bevorzugt aus elektrisch leitendem Werkstoff sein.

Die Hülsenpartie besteht - vorzugsweise jedenfalls über die gesamte axiale Länge der Werkzeugaufnahme hinweg - aus einer Innenhülse und einer Außenhülse. Die Außenhülse nimmt dabei die Innenhülse im betriebsbereiten Zustand auf und ist mit ihr spielfrei gefügt.

Auch die Außenhülse kann vorzugweise ebenfalls aus einem elektrisch leitenden Werkstoff bestehen.

Das **Werkzeugspannfutter** ist gekennzeichnet, durch einen Dehnungsspalt zwischen dem Werkzeugspannfuttergrundkörper, der Innenhülse und der Außenhülse.

Dabei mag unter "Dehnungsspalt" ein (schmaler) Freiraum zwischen zwei oder mehreren Bauelementen, hier zwischen dem Werkzeugspannfuttergrundkörper, der Innenhülse und der Außenhülse, verstanden werden.

Ein solcher Dehnungsspalt wird bevorzugt überall dort eingesetzt, wo Bauteile aus verschiedenen Materialien und/oder mit unterschiedlichen Eigenschaften - z. B. Anfälligkeiten für wärmebedingtes Schrumpfen und Dehnen -, aufeinandertreffen (Fügestelle).

Mag der Bezeichnung, "Dehnungsspalt", - neben seiner physischen Bedeutung als Spalt - auch funktionelle Bedeutung zukommen, nämlich, dass Spannungen abgebaut werden - und Rissen vorgebeugt wird, so mag - alternativ - der hier beim dem Werkzeugspannfutter vorgesehenen Dehnungsspalt auch als Freistich bezeichnet bzw. gesehen werden.

Dabei mag unter "Freistich", was dem auch eine fertigungstechnische Bedeutung zukommen lässt, eine Abtragung an einer Oberfläche eines Bauteils, hier des Werkzeugspannfuttergrundkörpers, der Innenhülse und der Außenhülse, mit einer bestimmten Form und festgelegten Maßen sein, die dort einen Freiraum (vgl. zum Dehnungsspalt) schafft. Der Freitraum wird insbesondere dann sichtbar/ausgebildet, wenn dort Bauteile, d.h. hier der Werkzeugspannfuttergrundkörper, die Innenhülse und die Außenhülse miteinander gefügt werden.

Vereinfacht und anschaulich gesehen - das Werkzeugspannfutter zeichnet sich dadurch aus, dass an der Fügestelle zwischen Werkzeugspannfuttergrundkörper, Innenhülse und Außenhülse ein Freiraum - zweckmäßiger und auf einfache Weise gebildet durch Materialabtrag bzw. "fehlendem Material" - an Werkzeugspannfuttergrundkörper, Innenhülse und Außenhülse (bei einstückiger Innenhülse an dem Werkzeugspannfuttergrundkörper der Freiraum entsprechend - s. unten), nämlich der Dehnungsspalt bzw. der Freistich, vorgesehen ist.

Durch den Dehnungsspalt bzw. den Freistich bei dem Werkzeugspannfutter, d.h. hier zwischen *dem* Werkzeugspannfuttergrundkörper, der Innenhülse und der Außenhülse, erreicht das Werkzeugspannfutter, dass - an der Fügestelle von Werkzeugspannfuttergrundkörper, der Innenhülse und der Außenhülse - Spannungen abgebaut werden und Rissen vorgebeugt wird. Damit kann insbesondere die Lebensdauer des Werkzeugspannfutters und/oder die Qualität des Werkzeugspannfutters - mit all seinen Eigenschaften, wie insbesondere seiner Dämpfung, - verlängert bzw. verbessert werden.

Insbesondere mag es zweckmäßig sein, wenn bei dem Dehnungspalt bzw. dem Freistich eine einen bzw. den Freiraum schaffende Nut in dem Werkzeugspannfuttergrundkörper ausgebildet ist.

Das **Werkzeugspannfutter** kann weiter auch gekennzeichnet sein, durch mindestens eine erste Zwischenhülse zwischen der Innen- und der Außenhülse.

Durch die mindestens eine erste Zwischenhülse zwischen der Innen- und der Außenhülse erreicht das Werkzeugspannfutter eine deutliche Herabsetzung der Neigung des Werkzeugspannfutters zu schädlichen Schwingungen. Kurz auch, das Dämpfungs-/Schwingungsverhalten des Werkzeugspannfutters wird verbessert.

Dafür scheinen die Grenzschichten, an denen die Zwischenhülse mit der Innenhülse bzw. der Außenhülse miteinander im Bereich der Werkzeugaufnahme in Kontakt stehen, verantwortlich zu sein. Nicht zuletzt, wenn Metall auf Metall trifft, tritt eine Dämpfung bzw. verringerte Fähigkeit, Schwingungen zu übertragen, auf.

Das scheint nicht zuletzt dann zu gelten, wenn die Zwischenhülse, die Innen- und die Außenhülse miteinander in im Normalbertrieb unlösbaren Kontakt stehen, beispielsweise miteinander verpresst sind, insbesondere, weil sie schon vor der Einspannung eines Werkzeugschafts und der damit einhergehenden Dehnungsbehinderung miteinander verpresst sind und ihre Verpressung durch das Einspannen des Werkzeugschafts noch gesteigert wird.

D.h., es kann insbesondere auch zweckmäßig sein, wenn die mindestens eine erste Zwischenhülse eine Presspassung mit der Innenhülse und/oder der Außenhülse aufweist.

Das **Werkzeugspannfutter** kann weiter auch dadurch gekennzeichnet sein, dass eine Funktionsfläche zumindest eines der bei der Hülsenpartie miteinander gefügten Bauteile, insbesondere an einem Innenumfang der Außenhülse oder an einem Außenumfang der Innenhülse oder an einem Innen- und/oder Außenumfang mindestens einer bzw. der ersten zwischen der Innen- und der Außenhülse angeordneten Zwischenhülse, thermochemisch wärmebehandelt und/oder beschichtet ist.

Durch die Beschichtung, insbesondere aber durch die thermochemische Wärmebehandlung, erreicht das Werkzeugspannfutter, dass ihren Funktionsflächen eine höhere Oberflächenhärte vermittelt wird, damit diese einen erhöhten Widerstand gegen abrasiven, adhäsiven und korrosiven Verschleiß bekommen.

Besonders zweckmäßig mag es sein, wenn die thermochemische Wärmebehandlung ein Nitrieren bei Diffusion von Stickstoff ist, wie beispielsweise ein Plasma-, Vakuum- oder Gasnitrieren, oder ein Nitrieren bei Diffusion von Stickstoff und Kohlenstoff ist, wie beispielsweise ein Gas-, Plasma- oder Salzbadnitrocarburieren.

So mag bei beim Plasmanitrieren und -nitrocarburieren in einer ionisierten Gasatmosphäre gezielt Stickstoff in die Randzone von Eisenbasislegierungen oder anderen Legierungen, die Nitridbildner enthalten, eindiffundiert werden. Das Plasmanitrier- bzw. das Plasmanitrocarburierverfahren wird insbesondere angewandt, um den Funktionsflächen eine höhere Oberflächenhärte zu vermitteln, damit diese einen erhöhten Widerstand gegen abrasiven, adhäsiven und korrosiven Verschleiß bekommen.

Alternativ kann auch vorgesehen sein, dass das **Werkzeugspannfutter** auch dadurch gekennzeichnet ist, dass auf eine Funktionsfläche zumindest eines der bei der Hülsenpartie miteinander gefügten Bauteile, insbesondere auf einen Innenumfang der Außenhülse oder auf einen Außenumfang der Innenhülse oder auf einen Innen- und/oder Außenumfang mindestens einer bzw. der ersten zwischen der Innen- und der Außenhülse angeordneten Zwischenhülse, Hartstoffe oder Legierungen aufgespritzt werden bzw. aufgespritzt sind.

Weiterhin kann vorgesehen sein, dass eine zweite Zwischenhülse zwischen der Innen- und der Außenhülse angeordnet ist. Dabei erscheint es weiter hier auch von Vorteil, dass die zweite Zwischenhülse eine Spielpassung mit der Innen- und/oder der Außenhülse aufweist.

Auch kann vorgesehen sein, dass eine bzw. eine der zwischen der Innen- und der Außenhülse angeordnete Zwischenhülse aus einem Kupfer haltigen Werkstoff oder aus einem Formgedächtnismaterial oder aus Memorymaterial oder aus einem Karbonfasermaterial oder aus einem Hartmetallwerkstoff oder aus einem Keramikwerkstoff besteht und/oder oder ein Ampcomaterial und/oder mindestens eine Härte von 50 HRC aufweist, insbesondere, dass die Zwischenhülse härter als die Außenhülse ist.

Neben der hierdurch auch erreichten Verbesserung beim Schwingungs- bzw. Dämpfungsverhalten ergibt sich eine verbesserte Gleiteigenschaft - bei ausreichender Härte, was verhindert, dass die Zwischenhülse - an den Funktionsflächen nicht frisst.

Auch ist es vorteilhaft, wenn eine bzw. einer der bzw. die zwischen der Innen- und der Außenhülse angeordnete Zwischenhülse und/oder die Außenhülse und/oder die Innenhülse mindestens eine innerhalb der Zwischenhülse bzw. der Außenhülse bzw. Innenhülse liegende Kammer aufweist.

Hier kann dann weiterbildend auch vorgesehen sein, dass in der mindestens einen Kammer Dämpfungskörper, insbesondere Pulver oder Öl oder, idealerweise in einem Käfig (insbesondere Metall- oder Kunststoffkäfig) gehaltene, Wälzkörper, insbesondere Kugeln, Rollen oder Nadeln, insbesondere Hartmetall- oder Keramikwälzkörper, oder (Schwermetall- oder Gummi-)Ringe oder (Hartmetall- oder Gummi-)Einsätze, gegebenenfalls, insbesondere durch eine Feder, vorgespannt, angeordnet sind.

Hierdurch kann weiter das Dämpfungs- bzw. Schwingungsverhalten des Werkzeugspannfutters verbessert werden.

Auch kann - mit entsprechender vorteilhafter Wirkung zu Dämpfung/Schwingung - auch die Außengeometrie der Zwischenhülse einen Freiraum, beispielsweise durch eine Nut, aufweisen. Entsprechend auch die Innen- bzw. Außenhülse.

Nach einer weiteren Ausgestaltung ist vorgesehen, dass die Außenhülse mit dem Werkzeugspannfuttergrundkörper verschweißt oder verlötet ist, idealerweise dadurch, dass ein Flansch der Außenhülse mit einem komplementären Gegenflansch oder einer komplementären Ringschulter des Werkzeugspannfuttergrundkörpers verschweißt oder verlötet ist, insbesondere durch ein Elektronenstrahlschweißen.

Gerade im Fall eines solchen Verschweißens bzw. Verlötens erweist sich der Dehnungsspalt bzw. der Freistich von immensem Vorteil, werden gerade hier Wärme bedingt auftretende Spannungen abgebaut.

Auch kann vorgesehen sein, dass (ähnlich bzw. funktionsähnlich der obigen Kammer) zwischen der Innenhülse und der Außenhülse und/oder in der Innenhülse und/oder in der Außenhülse mindestens ein Hohlraum angeordnet ist, in welchem insbesondere Dämpfungskörper, insbesondere Pulver oder Öl, insbesondere hydraulisches Öl, oder, idealerweise in einem Käfig (insbesondere Metall- oder Kunststoffkäfig) gehaltene, Wälzkörper, insbesondere Kugeln, Rollen oder Nadeln, insbesondere Hartmetall- oder Keramikwälzkörper, oder (Schwermetall- oder Gummi-)Ringe oder (Hartmetall- oder Gummi-)Einsätze, gegebenenfalls, insbesondere durch eine Feder, vorgespannt, angeordnet sind.

Auch hierdurch kann weiter das Dämpfungs- bzw. Schwingungsverhalten des Werkzeugspannfutters verbessert werden.

Ferner erscheint es auch zweckmäßig, wenn der mindestens eine Hohlraum unter Verwendung eines Liquids, insbesondere Wasser, oder Gases durchspült ist -, wodurch so auch eine Kühlwirkung/-funktion bei dem Werkzeugspannfutter erreicht werden kann. Ein solches Kühlmittel kann insbesondere Wasser, CO₂, Öl, Luft, MMS oder Ähnliches sein.

Bei einer Ausgestaltung ist auch eine Kammer in dem Werkzeugspannfuttergrundkörper vorgesehen, in welcher insbesondere Körper, insbesondere Pulver oder Öl, insbesondere hydraulisches Öl, oder, idealerweise in einem Käfig (insbesondere Metall- oder Kunststoffkäfig) gehaltene, Kugeln, Rollen oder Nadeln, insbesondere Hartmetall- oder Keramikkugeln, oder (Schwermetall- oder Gummi-)Ringe oder (Hartmetall- oder Gummi-)Einsätze, gegebenenfalls, insbesondere durch eine Feder, vorgespannt, angeordnet sind.

Insbesondere erscheint es auch von besonderer Zweckmäßigkeit, wenn die Außenhülse mit der Innenhülse bzw. die mindestens eine erste Zwischenhülse mit der Innen- und der Außenhülse auch dann durch Presssitz verbunden sind, wenn das Werkzeugspannfutter Raumtemperatur aufweist und keinen Werkzeugschaft eingespannt hält. Diese besondere Art der "Vorspannung" bei der Hülsenpartie trägt insbesondere zu verbessertem Spannvermögen, Dämpfungs- und Schwingungsverhalten bei.

Auch kann vorgesehen sein, dass die Außenhülse so gestaltet ist, dass sie nach ihrem thermischen Aufweiten und dem Einstecken des bestimmungsgemäß zu spannenden Werkzeugschafts in die Innenhülse beim Wiederabkühlen in ihrer Schrumpfung behindert wird, insbesondere durch die eine bzw. durch die zwischenhülse, und dadurch zu einem wesentlichen Teil zu Erzeugung des Presssitzes beiträgt, in dem der Werkzeugschaft gehalten wird.

Auch kann es zweckmäßig sein, wenn die Innenhülse so gestaltet ist, dass sie im kalten Zustand unter Spannung steht, beispielsweise durch die "verpresste" Zwischenhülse, und sich beim thermischen Aufweiten der Außenhülse durch Entspannung öffnet.

Besondere vorteilhaft erweist es sich, wenn die Innenhülse und die Außenhülse und die Zwischenhülse aus unterschiedlichem Material bestehen, beispielsweise aus unterschiedlichen Stahlsorten, etwa in Gestalt eines gehärteten, insbesondere einsatzgehärteten und daher bevorzugt verschleißunempfindlichen Stahls für die Innenhülse und eines Warmarbeitsstahls für die Außenhülse.

Gerade im Fall eines solchen Materialunterschieds erweist sich der Dehnungsspalt bzw. der Freistich von immensem Vorteil, werden gerade hier Wärme bedingt auftretende Spannungen abgebaut.

Fertigungstechnisch von Vorteil kann es auch sein, wenn die Innenhülse unlösbarer, bevorzugt integraler Bestandteil des Werkzeugspannfuttergrundkörpers ist (einstückige Verbindung - s. oben), der insbesondere auch die Kupplung zur Werkzeugmaschine ausbildet, vorzugweise zylindrisch oder als Steilkegel- oder Polygonschaftkegel- oder KM4X- oder HSK-Kupplung, gegebenenfalls als regional beschränkte Varianten MAS-BT (in Asien), ISO/DIN (in Europa) und CAT-V (in Amerika).

Nach einer bevorzugten Weiterbildung ist vorgesehen, dass die Innenhülse eine zylindrische oder eine kegelige Außenumfangsfläche und die Außenhülse eine komplementäre, zylindrische oder kegelige, Innenumfangsfläche aufweisen bzw. dass die Innenhülse eine zylindrische oder eine kegelige Außenumfangsfläche und die mindestens eine erste Zwischenhülse eine komplementäre, zylindrische oder kegelige, Innenumfangsfläche aufweisen bzw. dass die mindestens eine erste Zwischenhülse eine zylindrische oder eine kegelige Außenumfangsfläche und die Außenhülse eine komplementäre, zylindrische oder kegelige, Innenumfangsfläche aufweisen und/oder
dass die Innen- und die Außenhülse bzw. die Außenhülse und die mindestens eine erste Zwischenhülse bzw. die Innenhülse und die mindestens eine erste Zwischenhülse durch Verpressung miteinander gefügt sind, wobei, insbesondere bei zylindrischer Ausführung der Umfangsflächen der Hülsen, die Innenumfangsfläche der Außenhülse ein diametrales Untermaß gegenüber der Außenumfangsfläche der Innenhülse bzw. gegenüber der Außenumfangsfläche der mindestens einen ersten Zwischenhülse aufweist bzw. die Innenumfangsfläche der mindestens einen ersten Zwischenhülse ein diametrales Untermaß gegenüber der Außenumfangsfläche der Innenhülse aufweist.

Auch kann vorgesehen sein, dass die Hülsenpartie - vorzugsweise vollständig, im Wesentlichen oder weitgehend im Bereich außerhalb der axialen Erstreckung der Werkzeugaufnahme - einen Zentrierbereich ausbildet,
indem die Innenhülse einen vergrößerten Außendurchmesser aufweist und die Außenhülse einen komplementären Innendurchmesser aufweist, der beim miteinander Verpressen der Innen- und der Außenhülse in axialer Richtung einen Führungsbereich bildet, in dem die Innen- und die Außenhülse erstmal in Kontakt miteinander kommen und dort ohne nennenswerte Pressung aneinander geführt werden, und insbesondere erst dann, im Zuge des weiteren Aufeinander Schiebens, außerhalb des Führungsbereichs in Pressung gelangen oder
indem die Innenhülse einen vergrößerten Außendurchmesser aufweist und die, insbesondere zweite, Zwischenhülse einen komplementären Innendurchmesser aufweist, der beim miteinander Verpressen der Innen- und der, insbesondere zweiten, Zwischenhülse in axialer Richtung einen Führungsbereich bildet, in dem die Innen- und die, insbesondere zweite, Zwischenhülse erstmal in Kontakt miteinander kommen und dort ohne nennenswerte Pressung aneinander geführt werden, und insbesondere erst dann, im Zuge des weiteren Aufeinander Schiebens, außerhalb des Führungsbereichs in Pressung gelangen oder
indem die, insbesondere zweite, Zwischenhülse einen vergrößerten Außendurchmesser aufweist und die Außenhülse einen komplementären Innendurchmesser aufweist, der beim miteinander Verpressen der, insbesondere zweiten, Zwischen- und der Außenhülse in axialer Richtung einen Führungsbereich bildet, in dem die, insbesondere zweite, Zwischen- und die Außenhülse erstmal in Kontakt miteinander kommen und dort ohne nennenswerte Pressung aneinander geführt werden, um insbesondere erst dann, im Zuge des weiteren Aufeinander Schiebens, außerhalb des Führungsbereichs in Pressung gelangen.

Dabei kann der Führungsbereich bzw. Zentrierbereich auch über einen bevorzugt kegeligen Übergangsabschnitt in den der Werkzeugaufnahme zugeordneten Abschnitt der Hülsenpartie übergehen, wobei insbesondere im Bereich dieses bevorzugt kegeligen Übergangsabschnitts keine Anlage von Funktionsflächen der Hülsen aneinander erfolgt.

Weiterhin kann es sich als zweckmäßig erweisen, wenn die Außenhülse - bevorzugt in Aufschieberichtung nach ihrem eventuellen Führungsbereich - einen Flansch mit Durchgangslöchern ausbildet, dem ein komplementärer Flansch oder eine komplementäre Ringschulter mit Mutterngewindelöchern oder frei abstehenden Stehbolzen zugewandt ist, den bzw. die der Werkzeugspannfuttergrundkörper ausbildet, bevorzugt so, dass die Außenhülse durch Verschraubung mit dem Werkzeugspannfuttergrundkörper auf die Innenhülse aufgepresst werden kann, wobei bevorzugt Abdrückeinrichtungen zum Wiederabpressen der Außenhülse vorgesehen sind, idealerweise mittels Druckschrauben.

Diese Form der axialen Abstützung trägt insbesondere zu einer deutlichen Herabsetzung der Neigung des Werkzeugspannfutters zu schädlichen Schwingungen bei.

Auch kann ein Kühlmittelkanal vorgesehen sein, der bevorzugt am freien Stirnende der Hülsenpartie ausmündet, mit seiner Mündung, um dort Kühlmittel an das Werkzeug abzugeben, wobei der mindestens eine Kühlmittelkanal vorzugsweise primär durch eine umfangsseitig in sich geschlossene Bohrung durch die Außenhülse und/oder sekundär durch eine umfangsseitig in sich geschlossene Bohrung durch die Innenhülse gebildet wird.

Eine auch besonders bevorzugte Weiterbildung sieht einen bzw. den Dehnungsspalt zwischen dem Werkzeugspannfuttergrundkörper, der Innenhülse und der Außenhülse, und mindestens eine bzw. die erste Zwischenhülse zwischen der Innen- und der Außenhülse und eine bzw. die zweite Zwischenhülse zwischen der Innen- und der Außenhülse vor, wobei die erste Zwischenhülse mit Presspassung zwischen der Innenhülse und der Außenhülse angeordnet ist und die erste und die zweite Zwischenhülse axial zueinander beabstandet so angeordnet sind, dass die erste Zwischenhülse in Richtung zum freien offenen Ende hin nach der zweiten Zwischenhülse angeordnet ist. Weiter sieht diese Weiterbildung auch eine thermochemisch wärmebehandelte, insbesondere Plasma oder Gas nitrierte, Funktionsfläche zumindest eines der bei der Hülsenpartie miteinander gefügten Bauteile, insbesondere an einem bzw. dem Innenumfang der Außenhülse oder an einem bzw. dem Außenumfang der Innenhülse oder an einem bzw. dem Innen- und/oder Außenumfang mindestens einer Zwischenhülse, vor.

Gerade hier kommen dann alle wesentlichen Aspekte des Werkzeugspannfutters mit all seinen - obig beschriebenen - Vorteilen zum Tragen.

Nach der **Verwendung** eines bzw. des **Werkzeugspannfutters** ist eine Hochgeschwindigkeitszerspanung, insbesondere ein Hochgeschwindigkeitsfräsen (HSC), beides mit einer Schnittgeschwindigkeit von mehr als 800 m/min, besser mehr als 1.100 m/min, oder einem Hochleistungsfräsen (HPC) oder CAD/CAM optimierten trochoidalen Fräsen, vorgesehen.

Das **Werkzeugspannsystem** sieht mindestens ein bzw. das **Werkzeugspannfutter** und ein in Bezug auf seinen Schaftnenndurchmesser darauf abgestimmtes Schaftwerkzeug vor.

Abschließend kann zur Erfindung (in all seinen hier vorgestellten Aspekten, wie Dehnungsspalt/Freistich, Zwischenhülse und thermochemische Wärmebehandlung/Beschichtung,) festgestellt werden, dass sie sich mit allen ihren Aspekten insbesondere durch Einfachheit, Effizienz und Effektivität auszeichnet.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

### AUSFÜHRUNGSBEISPIELE

Es zeigen:
- FIG 1a, b, c: ein Werkzeugspannfutter, beispielsweise ein Schrumpffutter, mit einem Dehnungsspalt und Zwischenhülsen gemäß einer erfindungsgemäßen Ausführung;
- FIG 2a, b, c: ein Werkzeugspannfutter, beispielsweise ein Schrumpffutter, mit Kammern aufweisenden Zwischenhülsen gemäß einer erfindungsgemäßen Ausführung;
- FIG 3a, b, c: ein Werkzeugspannfutter, beispielsweise ein Schrumpffutter, mit Kugeln gemäß einer erfindungsgemäßen Ausführung;
- FIG 4a, b, c: ein Werkzeugspannfutter, beispielsweise ein Schrumpffutter, mit Rollen gemäß einer erfindungsgemäßen Ausführung;
- FIG 5a, b: ein Werkzeugspannfutter, beispielsweise ein Schrumpffutter, mit einer - ein federnd gelagertes Dämpfungselement aufweisende - Dämpfungskammer im Werkzeugspannfuttergrundkörper gemäß einer erfindungsgemäßen Ausführung;
- FIG 6a, b: ein Werkzeugspannfutter, beispielsweise ein Schrumpffutter, mit thermochemisch wärmebehandelten Funktionsflächen gemäß einer erfindungsgemäßen Ausführung.

FIGen 1 bis 6 zeigen verschiedene - jeweils in verschiedenen Ansichten und Details - Werkzeugspannfutter 1.

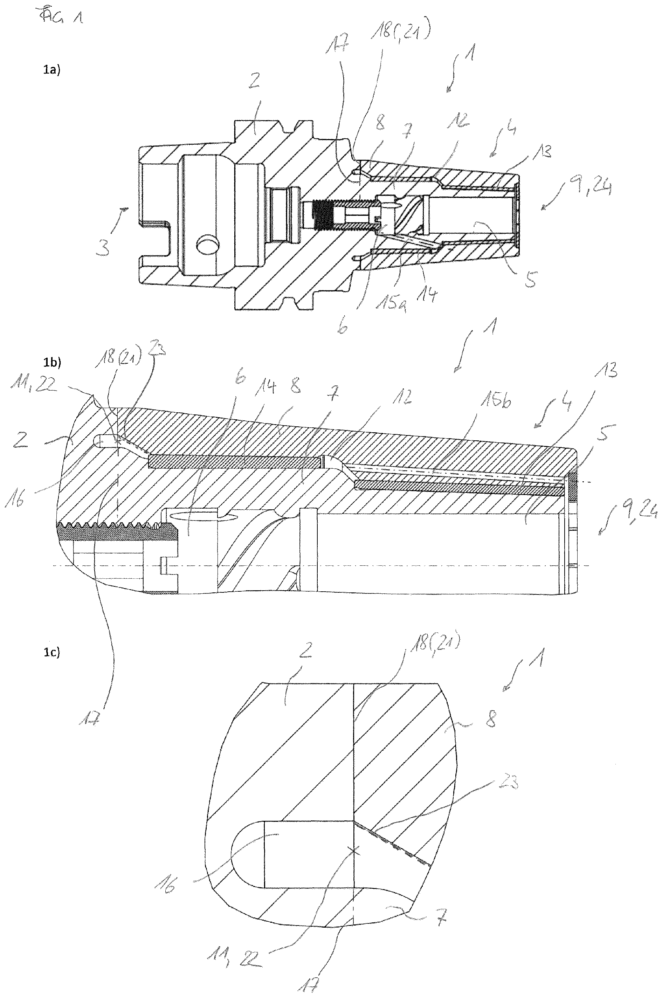

### Werkzeugspannfutter 1 mit einem Dehnungsspalt 11 und Zwischenhülsen 13, 14 (Figur 1a, b, c)

Das Werkzeugspannfutter 1, hier als Schrumpffutter, weist einen Werkzeugspannfuttergrundkörper 2 auf. Dieser besitzt an seinem einen hinteren Ende 3 eine Kupplung zum Ankuppeln an eine Werkzeugmaschine, bei der es sich in Figur 1 beispielhaft um eine HSK-Kupplung handelt.

Alternativ ist aber genauso gut eine SK-Kupplung oder ein anderes System denkbar. Die für die hier bevorzugt einzusetzenden Kupplungen verwendeten Begriffe HSK und SK sind den Fachleuten geläufig, da vielerorts standardmäßig verwendet.

An seinem der Kupplung abgewandten vorderen, freien Ende 9 bildet das Werkzeugspannfutter 1 eine Hülsenpartie 4 aus.

Innerhalb der Hülsenpartie 4 ist eine Werkzeugaufnahme 5 verwirklicht, die den Schaft des Werkzeugs, beispielsweise eines Schaftfräsers, (nicht gezeigt) festhält.

Die Hülsenpartie 4 bildet - in axialer Richtung - hinter, d.h. entgegengesetzt dem vorderen, freien Ende 9, dem Werkzeugschaft einen von diesem bzw. zum Halten von diesem nicht genutzten Auslaufbereich 6. Über diesen Auslaufbereich 6 kann Kühlmittel in die Hülsenpartie 4 herangeführt werden.

Diese Hülsenpartie 4 ist so ausgestaltet und wird so verwendet, dass sie einen Werkzeugschaft im Presssitz halten kann, sodass dieser während der Arbeit mit dem Werkzeug gegenüber dem Werkzeugspannfutter 1 weder rotiert noch in axialer Richtung ausgezogen wird oder verrutscht, jedenfalls in wesentlicher Art und Weise.

Die Einzelheiten eines diesbezüglich verwendeten Schrumpfprozesses und der entsprechenden Werkzeugspannfuttergestaltung als Schrumpffutter sind in der deutschen Patentanmeldung DE 199 15 412 A1 bzw. DE 10 2021 199 935 A1 beschrieben, die beide hiermit vollumfänglich zum Gegenstand dieser Offenbarung gemacht werden und auf deren Merkmale daher - gegebenenfalls zur Einschränkung der anmeldungsgegenständlichen Ansprüche - zurückgegriffen werden kann.

Das Werkzeugspannfutter 1 unterscheidet sich in Bezug auf seine Hülsenpartie 4 von einer solchen aus der genannten Anmeldung dadurch, dass die Hülsenpartie 4 zweilagig (7, 8) - mit entsprechend zwischen den zwei Lagen (7, 8) angeordneten Zwischenkörper (13, 14) - aufgebaut ist. Jedenfalls entlang des axialen Bereichs, in dem sie die Werkzeugaufnahme 5 ausbildet, - oft sogar darüber hinaus bis über den Bereich des Auslaufs 6 hinweg, wie hier in der Figur 1 erkennbar.

Sie ist zweilagig mit Zwischenschicht aufgebaut, indem sie aus einer - in diesem Fall einstückig mit dem Werkzeugspannfuttergrundkörper 2 verbundenen - Innenhülse 7 (vgl. hier dann wegen der Einstückigkeit nur gedankliche Ankoppelstelle 17 der Innenhülse 7 an den Werkzeugspannfuttergrundkörper 2 - markiert in Figur 1a) besteht und einer Außenhülse 8 - sowie dazwischen - axial hintereinander liegend - angeordneten zwei Zwischenhülsen 13, 14.

Zwischen den beiden Zwischenhülsen 13, 14, d.h. der vorderen 13 und der hinteren Zwischenhülse 14, bildet sich ein (ringförmiger) Freiraum bzw. Übergangsabschnitt 12 aus, an welchem ein radialer Abstand zwischen der Außenhülse 8 und der Innenhülse 7 verbleibt, auch wenn sie vollständig montiert und einsatzbereit sind (vgl. später zu den Kühlkanälen 15).

Wohingegen die Innenhülse 7 einstückig mit dem Werkzeugspannkörpergrundkörper 2 verbunden ist, ist die Außenhülse 8 mit dem Werkzeugspannfuttergrundkörper 2 - mittels Elektronenschweißen - (an der entsprechend Ankoppelstelle 18 an dem Werkzeugspannfuttergrundkörper 2 - markiert in Figur 1a) verschweißt (21) - idealerweise dadurch (nicht gezeigt), dass ein Flansch der Außenhülse 8 mit einem komplementären Gegenflansch oder einer komplementären Ringschulter des Werkzeugspannfuttergrundkörpers 2 verschweißt ist.

Alle Bauteile bestehen ihrerseits vorzugsweise aus Metall bzw. Stahl, aber vorzugsweise aus unterschiedlichen Stahlsorten.

In einer Ausführungsform kann auch der Werkzeugspannfuttergrundkörper 2 aus verschiedenen Materialien bestehen. So kann das hintere Ende 3 beispielsweise aus Stahl und die Innenhülse 7, die beispielsweise mit einem additiven Verfahren auf das Ende 3 aufgebaut wird, aus einem anderen Material wie z. B. Aluminium bestehen.

An der gemeinsamen Fügestelle 22, wo Werkzeugspannfuttergrundkörper 2, ((nur) gedanklich, weil einstückig) Innenhülse 7 und Außenhülse 8 zusammentreffen, ist ein Dehnungsspalt 11 bzw. Freistich 11 ausgebildet (vgl. insbesondere Figur 1c), - indem idealerweise Material am Werkzeugspannfuttergrundkörper 2, Innenhülse 7 und Außenhülse 8 weggenommen wurde - und so sich ein nicht unerheblicher, bemerkbarer Freiraum (d.h., der Dehnungsspalt/der Freistich 11) zwischen den genannten Bauteilen 2, 7, 8 (an deren Fügestelle 22) ausbildet.

Während beispielsweise die Materialabnahme bei der Außenhülse 8 an deren inneren Oberfläche erfolgen kann (vgl. Markierung 23 in Figur 1b, c), kann, wie hier gezeigt, die Materialabnahme bei dem Werkzeugspannfuttergrundkörper 2 durch eine Nut 16 erfolgen.

Durch den Dehnungsspalt 11 bzw. den Freistich 11 bei dem Werkzeugspannfutter 1, d.h. hier zwischen dem Werkzeugspannfuttergrundkörper 2, der Innenhülse 7 und der Außenhülse 8, erreicht das Werkzeugspannfutter 1, dass - an der Fügestelle 22 von Werkzeugspannfuttergrundkörper 2, der Innenhülse 7 und der Außenhülse 8 -, insbesondere thermisch bedingte (vgl. Elektronenstrahlschweißen), Spannungen abgebaut werden und Rissen vorgebeugt wird.

Die Innenhülse 7 und die Außenhülse 8 sind - über die vordere (d.h. zum freien Ende 9 hin bzw. am freien Ende 9 liegende) Zwischenhülse 13 - spielfrei miteinander verbunden - derart, dass zumindest die vordere Zwischenhülse 8 in Presspassungen zwischen der Innen- 7 und der Außenhülse 8 sitzt - wohingegen die hintere (d.h. zum dem freien Ende 9 abgewandten Ende 3 hin bzw. entgegen dem freien Ende liegend) Zwischenhülse 14 in einer Spielpassung zwischen zumindest einer der Innen- 7 und Außenhülse 8 sitzen kann.

Diese hintere Zwischenhülse 14 kann so dann - sehen die diesbezüglichen - hier zylindrischen - Funktionsflächen an Innenhülse 7, Außenhülse 8 und hinterer Zwischenhülse 14 entsprechende Untermaße vor - beim Fügen der Bauteile - einfach auf die Innenhülse 7 aufgeschoben werden.

Dieses Spiel an dieser Stelle besteht im Regelfall auch dann, wenn das Werkzeugspannfutter 1 noch keinen Schaft spannt, sondern bei Raumtemperatur unbenutzt auf seinen nächsten Einsatz wartet.

Steht aber das "Spannsystem" aus Innenhülse 7, Außenhülse 8 und dazwischenliegende vordere Zwischenhülse 13 - durch ihre dortigen Presspassungen (an ihren Funktionsflächen) - unter Spannung - und dadurch besonders "innig in Kontakt", erzeugt dies hohe, schwingungsdämpfende Friktion.

Diese Presssitze können insbesondere dadurch zustande kommen, dass die Innenhülse 7, zumindest entlang der überwiegenden axialen Länge der Werkzeugaufnahme 5, eine kegelige Außenumfangsfläche aufweist. Die vordere Zwischenhülse 13 weist dann eine dazu komplementäre, entsprechend kegelige Innenumfangsfläche auf.

Weiter sieht dann - wieder zumindest entlang der überwiegenden axialen Länge der Werkzeugaufnahme 5 - die vordere Zwischenhülse 13 eine kegelige Außenumfangsfläche vor - und weiter - weist die Außenhülse 8 eine dazu komplementäre, entsprechend kegelige Innenumfangsfläche auf.

Die Kegelwinkel wären bei allen (die Pressung ausbildenden) Funktionsflächen dieselben, was allerdings nicht zwangsläufig so sein müsste. Auch unterschiedliche Kegelwinkel wären realisierbar, so zum Beispiel durch eine vordere Zwischenhülse 13 mit unterschiedlichem Innen- und Außenkonus (- die komplementären Funktionsflächen an Innen- 7 und Außenhülse 8 wären dann entsprechend diesen Konuswinkeln).

Wird dann die vordere Zwischenhülse 13 in axialer Richtung auf die Innenhülse 7 aufgeschoben oder aufgepresst - und weiter dann die Außenhülse 8 auf die vordere Zwischenhülse 13 aufgeschoben oder aufgepresst, so erzeugt dies die gewünschte Pressung/-en.

Dies kann auch durch Schrumpfoperationen mit den genannten Bauteilen erfolgen - ohne, dass in diesem Fall die kegligen Funktionsflächen erforderlich wären - und was in diesem Fall durch entsprechende Übermaße an den, hier dann beispielsweise zylindrischen, Funktionsflächen bewerkstelligt werden könnte.

Weiter bildet das Werkzeugspannfutter einen (Kühlmittel-)Kanalverlauf aus - durch einen ersten, in der Innenhülse ausgebildeten Kühlkanal 15a vom Auslaufbereich 6 in einem Zwischenraum 12 zwischen der Innen- 7 und der Außenhülse 8 und dort zwischen der hinteren 14 und der vorderen Zwischenhülse 13, d.h. in den Übergangsabschnitt 12, sowie durch einen zweiten, in der Außenhülse 8 ausgebildeten Kühlkanal 15b von dem Zwischenraum/Übergangsabschnitt 12 bis ans vordere, freie Ende 9 der Außenhülse 8, mittels welchem Kühlmittel bis an die Stirnseite 24 des Werkzeugspannfutters 1 geführt werden kann.

Die beiden genannten Kanäle 15a, b sind dabei im Wesentlichen als Längsbohrungen ausgeführt.

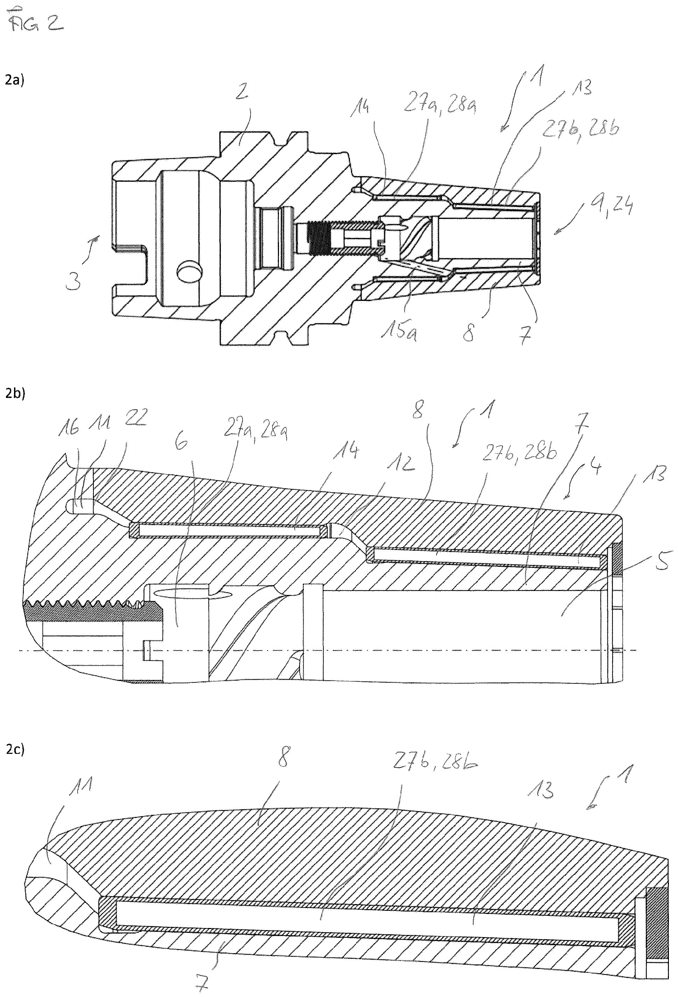

(Die in den Figuren 2 bis 6 gezeigten Werkzeugspannfutter 1 sind entsprechend dem Werkzeugspannfutter 1 aus Figur 1 aufgebaut/ausgebildet - bis auf weitere/andere - ebenfalls - vorteilhafte Details, (nur) die dann im Zusammenhang mit der jeweiligen Figur 2, 3, 4, 5 bzw. 6 näher beschrieben sein sollen. Dargestelltes, aber nicht Genanntes zu den Figuren 2 bis 6 kann (der Beschreibung von) Figur 1 entnommen werden.)

### Werkzeugspannfutter 1 mit Kammern 27a, b aufweisenden Zwischenhülsen (Figur 2a, b, c)

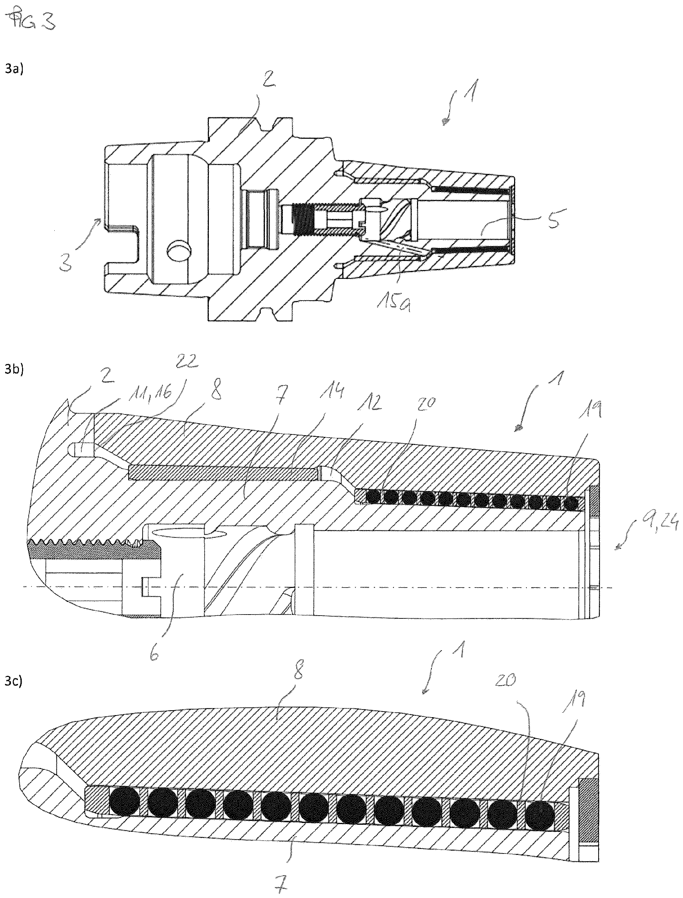

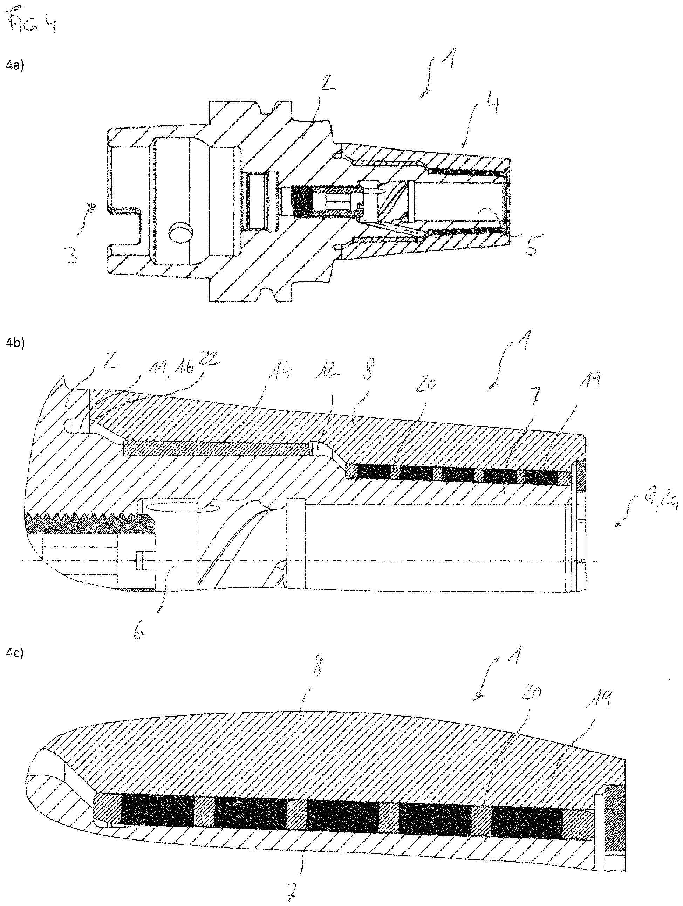

Bei diesem Werkzeugspannfutter 1 weisen die vordere 13 und gegebenenfalls auch, wie hier gezeigt, die hintere Zwischenhülse 14 jeweils eine innenliegende (Ring-)Kammer 27a bzw. 27b auf. Die beiden (Ring-)Kammern 27a, b bei den Zwischenhülsen 13, 14 sind - in diesem Fall - nicht befüllt - und sehen so jeweils einen Frei- bzw. Hohlraum 28a, b vor (vgl. dazu auch Figuren 3 und 4).

Dieser Frei-/Hohlraum 28a bzw. 28 b bzw. eine solche "hohle, ringförmige" Kammer 27a bzw. 27b trägt insbesondere zu einem verbesserten Schwingungs- und Dämpfungsverhalten bei dem Werkzeugspannfutter 1 bei.

### Werkzeugspannfutter 1 mit Kugeln 19 (Figur 3a, b, c)

Das hier gezeigte Werkzeugspannfutter 1 sieht vor, dass - anstelle vorbenannter vorderer Zwischenhülse 13 - dort in einem Kugelkäfig 20 gehaltene/geführte Kugeln 19 ("dreidimensionaler Kugelkörper") vorhanden sind.

Auch hier stehen die Kugeln 19 unter Pressung (von Außen- 8 und Innenhülse 7), so dass auch hier das "Spannsystem" aus Innenhülse 7, Außenhülse 8 und - in diesem Fall - dazwischenliegendem "Kugelkörper" unter Spannung steht, dadurch besonders "innig in Kontakt" ist - und dies hohe, schwingungsdämpfende Friktion erzeugt.

Wohingegen die Kugeln 19 hier im Presssitz angeordnet sind, braucht dies bei dem Käfig 20 nicht der Fall zu sein. Dieser kann mit Spiel zwischen der Innen- 7 und der Außenhülse 8 angeordnet sein. Alternativ hierzu, wäre aber auch ein Presssitz bei dem Käfig 20 möglich.

Dieser Kugelkörper bzw. diese (hohlzylindrisch verteilten) Kugeln 19 trägt bzw. tragen ebenfalls zu einem verbesserten Schwingungs- und Dämpfungsverhalten bei dem Werkzeugspannfutter bei.

### Werkzeugspannfutter mit Rollen 19 (Figuren 4a, b, c)

Das hier gezeigte Werkzeugspannfutter 1 sieht (ähnlich dem aus Figur 3) vor, dass - anstelle vorbenannter vorderer Zwischenhülse 13 - dort in einem Rollenkäfig 20 gehaltene/geführte (Zylinder-)Rollen 19 ("dreidimensionaler Rollenkörper") vorhanden sind.

Auch hier stehen die Rollen 19 unter Pressung (von Innen- 7 und Außenhülse 8), so dass auch hier das "Spannsystem" aus Innenhülse 7, Außenhülse 8 und - in diesem Fall - dazwischenliegendem "Rollenkörper" unter Spannung steht, dadurch besonders "innig in Kontakt" ist - und dies hohe, schwingungsdämpfende Friktion erzeugt.

Wohingegen die Rollen 19 hier im Presssitz angeordnet sind, braucht dies bei dem Käfig 20 nicht der Fall zu sein. Dieser kann mit Spiel zwischen der Innen- 7 und der Außenhülse 8 angeordnet sein. Alternativ hierzu, wäre aber auch ein Presssitz bei dem Käfig 20 möglich.

Dieser Rollenkörper bzw. diese (hohlzylindrisch verteilten) Rollen 19 trägt bzw. tragen ebenfalls zu einem verbesserten Schwingungs- und Dämpfungsverhalten bei dem Werkzeugspannfutter 1 bei.

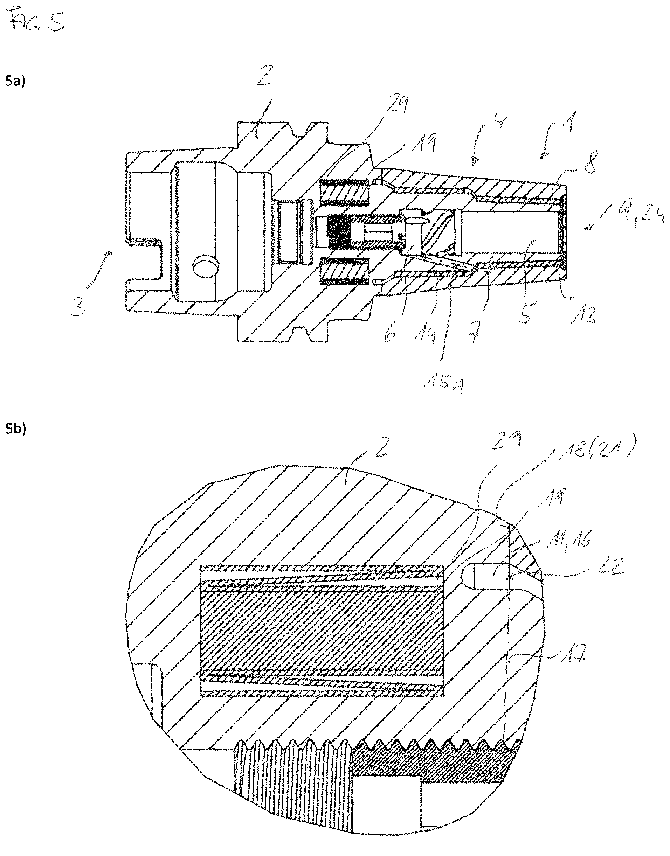

### Werkzeugspannfutter 1 mit einer - ein federnd gelagertes Dämpfungselement 19 aufweisenden - Dämpfungskammer im Werkzeugspannfuttergrundkörper 2 (Figur 5a, b)

Dieses Werkzeugspanfutter 1 sieht - im Werkzeugspannfuttergrundkörper 2 angeordnet - eine ringförmig umlaufende Kammer 29 vor.

In dieser Ringkammer 29 ist ein Dämpfungskörper 19, in diesem Fall in Form eines Hohlzylinders aus Hartgummi, federnd gelagert.

Dieses bzw. dieser beeinflusst das Schwingungs- und so das Dämpfungsverhalten des Werkzeugspannfutters 1 in besonders vorteilhafter, weil verbesserter, Weise.

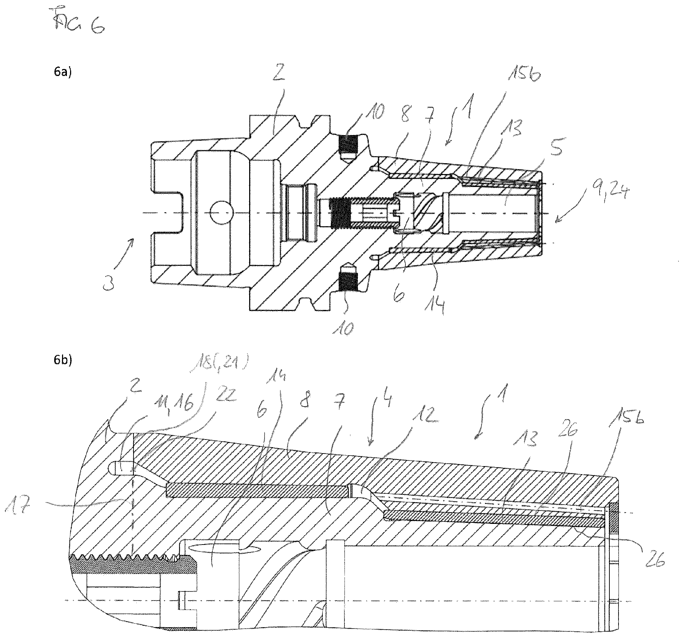

### Werkzeugspannfutter mit thermochemisch wärmebehandelten Funktionsflächen 26 (Figur 6a, b)

Bei diesem Werkzeugspannfutter 1 sind Funktionsflächen 26 des "Spannsystems" - aus Innenhülse 7 (Außenseite), Außenhülse 8 (Innenseite) und vorderer Zwischenhülse 13 (Innen- und Außenseite) thermochemisch wärmebehandelt - in diesem Fall mittels eines Plasmanitrier- oder Plasmanitrocarburierverfahren behandelt, um den Funktionsflächen 26 eine höhere Oberflächenhärte zu vermitteln, damit diese so einen erhöhten Widerstand gegen abrasiven, adhäsiven und korrosiven Verschleiß bekommen.

Darüber hinaus mögen derartig behandelte Funktionsflächen 26 auch bevorzugt schwingungsverringernd wirken.

Wenn auch hier alle Funktionsflächen 26 des "Spannsystems" - aus Innenhülse 7 (Außenseite), Außenhülse 8 (Innenseite) und vorderer Zwischenhülse 13 (Innen- und Außenseite) thermochemisch wärmebehandelt sind, können auch nur einzelne Funktionsflächen 26, beispielsweise die Außen- und Innenseite der vorderen Zwischenhülse 13 oder die Innenseite der Außenhülse 8 und die Außenseite der Innenhülse 7, (thermochemisch) behandelt sein, wodurch so jeweils zumindest eine Funktionsfläche eines jeweiligen Presssitzes behandelt ist.

Auch sieht das Werkzeugspannfutter 1 - hier auf der Außenseite des Werkzeugspannfuttergrundkörpers 2 - verschiedene(Wucht-(Gewinde-))Bohrungen 10 vor, welche gegebenenfalls - bei Wuchten - mit Massen, hier Wuchtschrauben, befüllt werden können.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

Auch alle in den Figuren gezeigten Merkmale können - einzelnen oder in Kombination - erfindungswesentlich sein, - oder zumindest für die Erfindung förderlich sein, - und können daher auch einzeln oder in Kombination (in Ansprüchen) beansprucht werden.

### BEZUGSZEICHENLISTE

- 1: Werkzeugspannfutter
- 2: Werkzeugspannfuttergrundkörper
- 3: hinteres Ende
- 4: Hülsenpartie
- 5: Werkzeugaufnahme
- 6: Auslaufbereich
- 7: Innenhülse
- 8: Außenhülse
- 9: vorderes, freies Ende
- 10: (Wucht-(Gewinde-))Bohrungen mit Wuchtschrauben

- 11: Dehnungsspalt, Freistich
- 12: Übergangsabschnitt
- 13: vordere Zwischenhülse
- 14: hintere Zwischenhülse
- 15a, b: Kühlmittelkanal, -bohrung
- 16: Nut (in 2)
- 17: Ankoppelstelle
- 18: Schweißstelle, Ankoppelstelle
- 19: Dämpfungs-Körper, -element, Kugel, Rolle
- 20: (Kugel-/Rollen-)Käfig

- 21: Schweiß-/Lötverbindung, Elektronenstrahlverschweißung
- 22: Fügestelle
- 23: Markierung für Materialabtrag (an 8)
- 24: Stirnseite
- 26: thermochemisch wärmebehandelter Bereich/Funktionsfläche, Beschichtung
- 27a, b: Kammer
- 28a, b: Frei-/Hohlraum in 27a, b
- 29: (Dämpfungs-)Kammer (in 2)

## Patentansprüche

1. **Werkzeugspannfutter** zum Spannen von einen Werkzeugschaft aufweisenden Werkzeugen, mit einer an ihrem freien Ende offenen und sich an einem Werkzeugspannfuttergrundkörper zum freien Ende hin anschließenden Hülsenpartie, aus bevorzugt elektrisch leitendem Werkstoff, die eine Werkzeugaufnahme zum reibschlüssigen Festsetzen des Werkzeugschafts im Presssitz, insbesondere durch Einschrumpfen, ausbildet, wobei die Hülsenpartie - vorzugsweise jedenfalls über die gesamte axiale Länge der Werkzeugaufnahme hinweg - aus einer Innenhülse und einer diese im betriebsbereiten Zustand aufnehmenden, spielfrei mit ihr gefügten Außenhülse besteht, die vorzugweise ebenfalls aus einem elektrisch leitenden Werkstoff besteht, **gekennzeichnet, durch**
einen Dehnungsspalt zwischen dem Werkzeugspannfuttergrundkörper, der Innenhülse und der Außenhülse.

2. Werkzeugspannfutter nach mindestens einem der voranstehenden Ansprüche,
**dadurch gekennzeichnet, dass**
bei dem Dehnungspalt ein einen Freiraum schaffender Einstich bzw. Nut in dem Werkzeugspannfuttergrundkörper ausgebildet ist.

3. **Werkzeugspannfutter** zum Spannen von einen Werkzeugschaft aufweisenden Werkzeugen, mit einer an ihrem freien Ende offenen und sich an einem Werkzeugspannfuttergrundkörper zum freien Ende hin anschließenden Hülsenpartie, aus bevorzugt elektrisch leitendem Werkstoff, die eine Werkzeugaufnahme zum reibschlüssigen Festsetzen des Werkzeugschafts im Presssitz, insbesondere durch Einschrumpfen, ausbildet, wobei die Hülsenpartie - vorzugsweise jedenfalls über die gesamte axiale Länge der Werkzeugaufnahme hinweg - aus einer Innenhülse und einer diese im betriebsbereiten Zustand aufnehmenden, spielfrei mit ihr gefügten Außenhülse besteht, die vorzugweise ebenfalls aus einem elektrisch leitenden Werkstoff besteht, bevorzugt nach Anspruch 1 oder Anspruch 10,
**gekennzeichnet, durch**
mindestens eine erste Zwischenhülse zwischen der Innen- und der Außenhülse.

4. Werkzeugspannfutter nach mindestens einem der voranstehenden Ansprüche,
**dadurch gekennzeichnet, dass**
die mindestens eine erste Zwischenhülse eine Presspassung mit der Innenhülse und/oder der Außenhülse aufweist.

5. Werkzeugspannfutter nach mindestens einem der voranstehenden Ansprüche,
**gekennzeichnet, durch**
eine zweite Zwischenhülse zwischen der Innen- und der Außenhülse.

6. Werkzeugspannfutter nach mindestens einem der voranstehenden Ansprüche,
**dadurch gekennzeichnet, dass**
die zweite Zwischenhülse eine Spielpassung mit der Innen- und/oder der Außenhülse aufweist.

7. Werkzeugspannfutter nach mindestens einem der voranstehenden Ansprüche,
**dadurch gekennzeichnet, dass**
eine zwischen der Innen- und der Außenhülse angeordnete Zwischenhülse aus einem Kupfer haltigen Werkstoff oder aus einem Formgedächtnismaterial oder aus Memorymaterial oder aus einem Karbonfasermaterial oder aus einem Hartmetallwerkstoff oder aus einem Keramikwerkstoff besteht und/oder oder ein Ampcomaterial und/oder mindestens eine Härte von 50 HRC aufweist, insbesondere, dass die Zwischenhülse härter als die Außenhülse ist.

8. Werkzeugspannfutter nach mindestens einem der voranstehenden Ansprüche,
**dadurch gekennzeichnet, dass**
eine zwischen der Innen- und der Außenhülse angeordnete Zwischenhülse und/oder die Außenhülse und/oder die Innenhülse mindestens eine innerhalb der Zwischenhülse bzw. der Außenhülse bzw. Innenhülse, liegende Kammer aufweist.

9. Werkzeugspannfutter nach mindestens einem der voranstehenden Ansprüche,
**dadurch gekennzeichnet, dass**
in der mindestens einen Kammer Dämpfungskörper, insbesondere Pulver oder Öl oder, insbesondere bzw. idealerweise in einem Käfig (insbesondere Metall- oder Kunststoffkäfig) gehaltene, Wälzkörper, insbesondere Kugeln, Rollen oder Nadeln, insbesondere Hartmetall- oder Keramikwälzkörper, oder (Schwermetall- oder Gummi-)Ringe oder (Hartmetall- oder Gummi-)Einsätze, gegebenenfalls, insbesondere durch eine Feder, vorgespannt, angeordnet sind.

10. **Werkzeugspannfutter** zum Spannen von einen Werkzeugschaft aufweisenden Werkzeugen, mit einer an ihrem freien Ende offenen und sich an einem Werkzeugspannfuttergrundkörper zum freien Ende hin anschließenden Hülsenpartie, aus bevorzugt elektrisch leitendem Werkstoff, die eine Werkzeugaufnahme zum reibschlüssigen Festsetzen des Werkzeugschafts im Presssitz, insbesondere durch Einschrumpfen, ausbildet, wobei die Hülsenpartie- vorzugsweise jedenfalls über die gesamte axiale Länge der Werkzeugaufnahme hinweg - aus einer Innenhülse und einer diese im betriebsbereiten Zustand aufnehmenden, spielfrei mit ihr gefügten Außenhülse besteht, die vorzugweise ebenfalls aus einem elektrisch leitenden Werkstoff besteht, bevorzugt nach Anspruch 1 oder Anspruch 3,
**dadurch gekennzeichnet, dass**
eine Funktionsfläche zumindest eines der bei der Hülsenpartie miteinander gefügten Bauteile, insbesondere an einem Innenumfang der Außenhülse oder an einem Außenumfang der Innenhülse oder an einem Innen- und/oder Außenumfang mindestens einer ersten zwischen der Innen- und der Außenhülse angeordneten Zwischenhülse, thermochemisch wärmebehandelt und/oder beschichtet ist oder dass auf eine Funktionsfläche zumindest eines der bei der Hülsenpartie miteinander gefügten Bauteile, insbesondere auf einen Innenumfang der Außenhülse oder auf einen Außenumfang der Innenhülse oder auf einen Innen- und/oder Außenumfang mindestens einer bzw. der ersten zwischen der Innen- und der Außenhülse angeordneten Zwischenhülse, Hartstoffe oder Legierungen aufgespritzt werden bzw. aufgespritzt sind.

11. Werkzeugspannfutter nach mindestens einem der voranstehenden Ansprüche,
**dadurch gekennzeichnet, dass**
die thermochemische Wärmebehandlung ein Nitrieren bei Diffusion von Stickstoff ist, wie beispielsweise ein Plasma-, Vakuum- oder Gasnitrieren, oder ein Nitrieren bei Diffusion von Stickstoff und Kohlenstoff ist, wie beispielsweise ein Gas-, Plasma- oder Salzbadnitrocarburieren.

12. Werkzeugspannfutter nach mindestens einem der voranstehenden Ansprüche,
**dadurch gekennzeichnet, dass**
die Außenhülse mit dem Werkzeugspannfuttergrundkörper verschweißt oder verlötet ist, idealerweise dadurch, dass ein Flansch der Außenhülse mit einem komplementären Gegenflansch oder einer komplementären Ringschulter des Werkzeugspannfuttergrundkörpers verschweißt oder verlötet ist, insbesondere durch ein Elektronenstrahlschweißen.

13. Werkzeugspannfutter nach mindestens einem der voranstehenden Ansprüche,
**dadurch gekennzeichnet, dass**
zwischen der Innenhülse und der Außenhülse und/oder in der Innenhülse und/oder in der Außenhülse mindestens ein Hohlraum angeordnet ist, in welchem insbesondere Dämpfungskörper, insbesondere Pulver oder Öl, insbesondere hydraulisches Öl, oder, idealerweise in einem Käfig (insbesondere Metall- oder Kunststoffkäfig) gehaltene, Wälzkörper, insbesondere Kugeln oder Nadeln, insbesondere Hartmetall- oder Keramikwälzkörper, oder (Schwermetall- oder Gummi-)Ringe oder (Hartmetall- oder Gummi-)Einsätze, gegebenenfalls, insbesondere durch eine Feder, vorgespannt, angeordnet sind.

14. Werkzeugspannfutter nach mindestens einem der voranstehenden Ansprüche,
**dadurch gekennzeichnet, dass**
der mindestens eine Hohlraum unter Verwendung eines Liquids, insbesondere Wasser, oder Gases durchspült ist.

15. Werkzeugspannfutter nach mindestens einem der voranstehenden Ansprüche,
**gekennzeichnet, durch**
eine Kammer in dem Werkzeugspannfuttergrundkörper, in welcher insbesondere Körper, insbesondere Pulver oder Öl, insbesondere hydraulisches Öl, oder, idealerweise in einem Käfig (insbesondere Metall- oder Kunststoffkäfig) gehaltene, Kugeln, insbesondere Hartmetall- oder Keramikkugeln, oder (Schwermetall- oder Gummi-)Ringe oder (Hartmetall- oder Gummi-)Einsätze, gegebenenfalls, insbesondere durch eine Feder, vorgespannt, angeordnet sind.

16. Werkzeugspannfutter nach mindestens einem der voranstehenden Ansprüche,
**dadurch gekennzeichnet, dass**
die Außenhülse mit der Innenhülse bzw. die mindestens eine erste Zwischenhülse mit der Innen- und der Außenhülse auch dann durch Presssitz verbunden ist, wenn das Werkzeugspannfutter Raumtemperatur aufweist und keinen Werkzeugschaft eingespannt hält.

17. Werkzeugspannfutter nach mindestens einem der voranstehenden Ansprüche,
**dadurch gekennzeichnet, dass**
die Außenhülse so gestaltet ist, dass sie nach ihrem thermischen Aufweiten und dem Einstecken des bestimmungsgemäß zu spannenden Werkzeugschafts in die Innenhülse beim Wiederabkühlen in ihrer Schrumpfung behindert wird, und dadurch zu einem wesentlichen Teil zu Erzeugung des Presssitzes beiträgt, in dem der Werkzeugschaft gehalten wird.

18. Werkzeugspannfutter nach mindestens einem der voranstehenden Ansprüche,
**dadurch gekennzeichnet, dass**
die Innenhülse so gestaltet ist, dass sie im kalten Zustand unter Spannung steht und sich beim thermischen Aufweiten der Außenhülse durch Entspannung öffnet.

19. Werkzeugspannfutter nach mindestens einem der voranstehenden Ansprüche,
**dadurch gekennzeichnet, dass**
die Innenhülse und/oder die Außenhülse und/oder die Zwischenhülse aus unterschiedlichem Material bestehen, beispielsweise aus unterschiedlichen Stahlsorten, etwa in Gestalt eines gehärteten, insbesondere einsatzgehärteten und daher bevorzugt verschleißunempfindlichen Stahls für die Innenhülse und eines Warmarbeitsstahls für die Außenhülse.

20. Werkzeugspannfutter nach mindestens einem der voranstehenden Ansprüche,
**dadurch gekennzeichnet, dass**
die Innenhülse unlösbarer, bevorzugt integraler Bestandteil des Werkzeugspannfuttergrundkörpers ist, der insbesondere auch die Kupplung zur Werkzeugmaschine ausbildet, vorzugweise zylindrisch oder als Steilkegel- oder Polygonschaftkegel- oder KM4X- oder HSK-Kupplung, gegebenenfalls als regional beschränkte Varianten MAS-BT (in Asien), ISO/DIN (in Europa) und CAT-V (in Amerika).

21. Werkzeugspannfutter nach mindestens einem der voranstehenden Ansprüche,
**dadurch gekennzeichnet, dass**
die Innenhülse eine zylindrische oder eine kegelige Außenumfangsfläche und die Außenhülse eine komplementäre, zylindrische oder kegelige, Innenumfangsfläche aufweisen bzw. dass die Innenhülse eine zylindrische oder eine kegelige Außenumfangsfläche und die mindestens eine erste Zwischenhülse eine komplementäre, zylindrische oder kegelige, Innenumfangsfläche aufweisen bzw. dass die mindestens eine erste Zwischenhülse eine zylindrische oder eine kegelige Außenumfangsfläche und die Außenhülse eine komplementäre, zylindrische oder kegelige, Innenumfangsfläche aufweisen **und/oder**
dass die Innen- und die Außenhülse bzw. die Außenhülse und die mindestens eine erste Zwischenhülse bzw. die Innenhülse und die mindestens eine erste Zwischenhülse durch Verpressung miteinander gefügt sind, wobei, insbesondere bei zylindrischer Ausführung der Umfangsflächen der Hülsen, die Innenumfangsfläche der Außenhülse ein diametrales Untermaß gegenüber der Außenumfangsfläche der Innenhülse bzw. gegenüber der Außenumfangsfläche der mindestens einen ersten Zwischenhülse aufweist bzw. die Innenumfangsfläche der mindestens einen ersten Zwischenhülse ein diametrales Untermaß gegenüber der Außenumfangsfläche der Innenhülse aufweist.

22. Werkzeugspannfutter nach mindestens einem der vorhergehenden Ansprüche,
**dadurch gekennzeichnet, dass**
die Hülsenpartie - vorzugsweise vollständig, im Wesentlichen oder weitgehend im Bereich außerhalb der axialen Erstreckung der Werkzeugaufnahme - einen Zentrierbereich ausbildet, indem die Innenhülse einen vergrößerten Außendurchmesser aufweist und die Außenhülse einen komplementären Innendurchmesser aufweist, der beim miteinander Verpressen der Innen- und der Außenhülse in axialer Richtung einen Führungsbereich bildet, in dem die Innen- und die Außenhülse erstmal in Kontakt miteinander kommen und dort ohne nennenswerte Pressung aneinander geführt werden, und insbesondere erst dann, im Zuge des weiteren Aufeinander Schiebens, außerhalb des Führungsbereichs in Pressung gelangen **oder**
indem die Innenhülse einen vergrößerten Außendurchmesser aufweist und die, insbesondere zweite, Zwischenhülse einen komplementären Innendurchmesser aufweist, der beim miteinander Verpressen der Innen- und der, insbesondere zweiten, Zwischenhülse in axialer Richtung einen Führungsbereich bildet, in dem die Innen- und die, insbesondere zweite, Zwischenhülse erstmal in Kontakt miteinander kommen und dort ohne nennenswerte Pressung aneinander geführt werden, und insbesondere erst dann, im Zuge des weiteren Aufeinander Schiebens, außerhalb des Führungsbereichs in Pressung gelangen **oder**
indem die, insbesondere zweite, Zwischenhülse einen vergrößerten Außendurchmesser aufweist und die Außenhülse einen komplementären Innendurchmesser aufweist, der beim miteinander Verpressen der, insbesondere zweiten, Zwischen- und der Außenhülse in axialer Richtung einen Führungsbereich bildet, in dem die, insbesondere zweite, Zwischen- und die Außenhülse erstmal in Kontakt miteinander kommen und dort ohne nennenswerte Pressung aneinander geführt werden, und insbesondere erst dann, im Zuge des weiteren Aufeinander Schiebens, außerhalb des Führungsbereichs in Pressung gelangen.

23. Werkzeugspannfutter nach mindestens einem der vorhergehenden Ansprüche,
**dadurch gekennzeichnet, dass**
der Führungsbereich bzw. Zentrierbereich über einen bevorzugt kegeligen Übergangsabschnitt in den der Werkzeugaufnahme zugeordneten Abschnitt der Hülsenpartie übergeht, wobei insbesondere im Bereich dieses bevorzugt kegeligen Übergangsabschnitts keine Anlage von Funktionsflächen der Hülsen aneinander erfolgt.

24. Werkzeugspannfutter nach mindestens einem der vorhergehenden Ansprüche,
**dadurch gekennzeichnet, dass**
die Außenhülse - bevorzugt in Aufschieberichtung vor ihrem eventuellen Führungsbereich - einen Flansch mit Durchgangslöchern ausbildet, dem ein komplementärer Flansch oder eine komplementäre Ringschulter mit Mutterngewindelöchern oder frei abstehenden Stehbolzen zugewandt ist, den bzw. die der Werkzeugspannfuttergrundkörper ausbildet, bevorzugt so, dass die Außenhülse durch Verschraubung mit dem Werkzeugspannfuttergrundkörper auf die Innenhülse aufgepresst werden kann, wobei bevorzugt Abdrückeinrichtungen zum Wiederabpressen der Außenhülse vorgesehen sind, idealerweise mittels Druckschrauben.

25. Werkzeugspannfutter nach mindestens einem der vorhergehenden Ansprüche,
**gekennzeichnet, durch**
einen Kühlmittelkanal, der bevorzugt am freien Stirnende der Hülsenpartie ausmündet, mit seiner Mündung, um dort Kühlmittel an das Werkzeug abzugeben, wobei der mindestens eine Kühlmittelkanal vorzugsweise primär durch eine umfangsseitig in sich geschlossene Bohrung durch die Außenhülse und/oder sekundär durch eine umfangsseitig in sich geschlossene Bohrung durch die Innenhülse gebildet wird.

26. Werkzeugspannfutter nach mindestens einem der vorhergehenden Ansprüche,
**gekennzeichnet, durch**
einen Dehnungsspalt zwischen dem Werkzeugspannfuttergrundkörper, der Innenhülse und der Außenhülse, und
mindestens einer ersten Zwischenhülse zwischen der Innen- und der Außenhülse und einer zweiten Zwischenhülse zwischen der Innen- und der Außenhülse, wobei die erste Zwischenhülse mit Presspassung zwischen der Innenhülse und der Außenhülse angeordnet ist und die erste und die zweite Zwischenhülse axial zueinander beabstandet so angeordnet sind, dass die erste Zwischenhülse in Richtung zum freien offenen Ende hin nach der zweiten Zwischenhülse angeordnet ist, sowie einer thermochemisch wärmebehandelten, insbesondere Plasma oder Gas nitrierten, Funktionsfläche zumindest eines der miteinander gefügten Bauteile, insbesondere an einem Innenumfang der Außenhülse oder an einem Außenumfang der Innenhülse oder an einem Innen- und/oder Außenumfang mindestens einer der Zwischenhülsen.

27. **Verwendung** eines Werkzeugspannfutters gemäß eines der vorhergehenden Ansprüche zur Hochgeschwindigkeitszerspanung, insbesondere zum Hochgeschwindigkeitsfräsen (HSC) oder CAD/CAM optimierten trochoidalen Fräsen, bevorzugt beides mit einer Schnittgeschwindigkeit von mehr als 800 m/min, besser mehr als 1.100 m/min, oder einem Hochleistungsfräsen (HPC).

28. **Werkzeugspannsystem** aus mindestens einem Werkzeugspannfutter gemäß einem der vorhergehenden Ansprüche und einem in Bezug auf seinen Schaftnenndurchmesser darauf abgestimmten Schaftwerkzeug.
